# FASCICULE DE BREVET EUROPEEN

(11) **EP 0 564 354 B1**
(45) Date de publication et mention de la délivrance du brevet: **27.11.1996**
(21) Numéro de dépôt: 93400823.6
(22) Date de dépôt: 30.03.1993
(51) Int. Cl.: B29C 49/64, B29C 49/68

(54) **Procédé de conditionnement thermique de préformes en matières thermoplastiques et dispositif pour la mise en oeuvre de ce procédé**
Verfahren und Vorrichtung zum thermischen Konditionieren von thermoplastischen Vorformlingen
Method and apparatus for thermal conditioning of thermoplastic preforms

(30) Priorité: 03.04.1992 FR 9204274
(43) Date de publication de la demande: 06.10.1993
(73) Titulaire: S I D E L, F-76053 Le Havre Cédex (FR)
(72) Inventeur: Emmer, Gérard, F-76280 St Jouin Bruneval (FR)
(74) Mandataire: Gorree, Jean-Michel

(56) Documents cités:
- DE-A- 3 101 282
- GB-A- 2 015 920
- GB-A- 2 156 732

## Description

La présente invention concerne d'une manière générale les fours de chauffage par rayonnement infrarouge et plus particulièrement ceux destinés au chauffage de préformes en matières thermoplastiques destinées à la fabrication de corps creux tels que des bouteilles, flacons ou analogues par soufflage ou par étirage soufflage.

Dans les machines connues de fabrication de tels corps creux par soufflage ou étirage soufflage, il est prévu au moins : un poste de conditionnement thermique des préformes dans lequel ces dernières sont chauffées à une température telle qu'elles puissent être ensuite moulées par soufflage ou par étirage soufflage ; et un poste de soufflage des préformes dans des moules dont l'empreinte à la forme du corps creux à obtenir. Des transporteurs respectifs assurent l'amenée des préformes au poste de conditionnement thermique et le transfert des préformes chaudes entre ce dernier et le poste de soufflage.

Le chauffage par rayonnement infrarouge est connu et est largement répandu dans l'industrie, en particulier pour le conditionnement thermique de préformes en matières plastiques, notamment en Polyéthylènetéréphtalate (PET), lesdites préformes étant destinées à la fabrication de corps creux tels que des bouteilles, flacons ou analogues par soufflage ou par étirage soufflage. Par rapport à d'autres modes de chauffage ou conditionnement thermique, tels que la convection et la conduction, de par la faible conductivité thermique du matériau, le chauffage par rayonnement infrarouge présente un rendement avantageux et permet des cadences plus élevées.

Etant donnée la forte densité d'énergie mise en jeu dans ces fours, il est nécessaire de refroidir les parties du four les plus exposées au rayonnement infrarouge et en particulier les parties fixes, afin de ne pas les endommager. Pour cela, on est amené à créer un flux d'air de refroidissement qui évacue les calories superflues. Dans les modes de réalisation usuels, l'air est collecté dans le local où est implanté le four, par le biais d'un ou plusieurs ventilateurs ; une fois l'échange thermique effectué, cet air est évacué dans le local en partie haute du four.

La recherche de cadences toujours améliorées, le soufflage de bouteilles ou de récipients de formes de plus en plus complexes, la réduction du poids des préformes tout en conservant, voire en améliorant les performances techniques de l'article final, nécessitent une répartition de la matière dans l'objet final, à la fois précise et répétitive tout au long de la production. Ceci se traduit par la nécessité de maitriser parfaitement le conditionnement thermique des préformes, d'où des règlages précis quant au profil de chauffe. On requiert donc une très grande précision, non seulement dans l'implantation des émetteurs infrarouge et dans les règlages d'intensité associés, mais aussi dans la stabilité en température du flux d'air qui traverse le four.

Des essais ont montré l'influence néfaste de toute variation de la température de ce flux d'air, notamment sur la répartition d'épaisseur et plus globalement sur la qualité de l'article final. Cet air qui est puisé dans l'atelier où est implanté la machine, généralement non pourvu d'une installation coûteuse de conditionnement d'air, voit sa température évoluer entre l'été et l'hiver, le jour et la nuit, ainsi qu'en fonction de paramètres tels que l'ouverture d'une porte par exemple. En fait, il apparait que durant la même journée les variations de température peuvent être importantes. Etant donné que le circuit de régulation du conditionnement thermique des préformes est piloté par un pyromètre à infrarouge repérant la température de la paroi extérieure des préformes, toute variation de la température du flux d'air de refroidissement va influer sur la température de la paroi extérieure des préformes. La relation qui existe entre la quantité de chaleur emmagasinée dans les préformes et la lecture du pyromètre infrarouge est alors faussée. Il en résulte que la régulation du conditionnement thermique est perturbée et que les règlages précis des profils de chauffe des préformes ne sont plus corrects, ce qui conduit à la production de corps creux de qualité non uniforme.

Le document GB-A-2 156 732 décrit un appareil de chauffage de préformes qui comprend un tunnel équipé de radiateurs émettant un rayonnement infra-rouge et des supports de préformes qui sont aptes à se déplacer le long de l'axe longitudinal du tunnel et à tourner sur eux-mêmes simultanément. L'enceinte formée par le tunnel est relié à des moyens d'aspiration permettant de la mettre en dépression. Il est ainsi possible de chauffer le corps de la préforme par convexion, tout en refroidissant son col.

Le document DE-A-31 01 282 décrit un appareil de chauffage de préformes par rayonnement infra-rouge avec soufflage, sur la préforme, d'un courant étroit d'un fluide de refroidissement, de manière à créer un gradient de température souhaité dans la paroi de la préforme.

Toutefois, ces deux dispositifs connus ne prévoient aucun moyen permettant de s'affranchir de l'influence, sur la qualité de l'article achevé, des variations de la température ambiante dans l'atelier où est située la machine et ne permettent donc pas de résoudre le problème ci-dessus exposé.

L'invention a donc pour but de remédier aux inconvénients exposés ci-avant et de proposer un procédé et un dispositif qui permettent la production industrielle de corps creux en matières thermoplastiques présentant une qualité uniforme malgré des variations de la température ambiante règnant dans l'atelier de production.

A cet effet, l'invention a pour objet un procédé de conditionnement thermique de préformes en matière thermoplastique, notamment en polyéthylènetéréphtalate (PET), destinées à la fabrication de corps creux tels que bouteilles, flacons ou analogues par soufflage ou étirage soufflage dans lequel les préformes en rotation sur elles-mêmes sont chauffées par défilement devant des éléments chauffants à rayonnement infrarouge, un flux d'air de refroidissement étant utilisé pour évacuer les calories superflues générées par le rayonnement infrarouge. Ce procédé se caractérise essentiellement en ce que la température du flux d'air de refroidissement est maintenue constante et égale à une température de consigne Tc en mélangeant des proportions respectivement réglables d'air à la température ambiante et d' air chaud provenant du recyclage d'au moins une partie du flux d'air de refroidissement qui s'est échauffé en évacuant les calories superfllues.

L'invention a aussi pour objet un dispositif de conditionnement thermique de préformes en matière thermoplastique, notamment en polyéthylènetérephtalate (PET), destinées à la fabrication de corps creux tels que bouteilles, flacons ou analogues par soufflage ou étirage soufflage, comprenant des support rotatifs de préformes défilant devant des éléments chauffants à rayonnement infrarouge, des panneaux isolants disposés à l'arrière des éléments chauffants, des réflecteurs disposés face aux éléments chauffants, des protecteurs des cols des préformes et au moins un ventilateur créant un flux d'air de refroidissement qui évacue les calories superflues générées par le rayonnement infrarouge en refroidissant les parties constitutives dudit dispositif. Ce dernier se caractérise essentiellement en ce qu'il comporte : des moyens de recyclage d'au moins une partie du flux d'air de refroidissement qui s'est échauffé en évacuant les calories superflues ; des moyens de mélange d'air chaud recyclé et d'air à température ambiante admis dans la tubulure d'aspiration du ventilateur ; et des moyens de réglage des proportions respectives d'air chaud recyclé et d'air à température ambiante ; ce grâce à quoi il est possible de maintenir la température du flux d'air de refroidissement constante et égale à une température de consigne Tc.

Les caractéristiques et avantages de l'invention ressortiront à la lecture de la description qui va suivre, faite en référence aux dessins annexés, donnés uniquement à titre d'exemples non limitatifs et parmi lesquels :
- la Fig 1 est une vue en coupe transversale d'un mode de réalisation d'un four de conditionnement thermique de préformes selon l'invention ;
- la Fig 2 est un exemple de relevé de la température ambiante d'un atelier de production de récipients en fonction du temps.

Selon la technique connue, les préformes sont chauffées dans des fours à défilement équipés de lampes à rayonnement infrarouge disposée le long de la trajectoire suivie par les préformes, lesquelles sont soumises en outre à une rotation autour de leur axe longitudinal pour être chauffées de façon uniforme. Les parties du four les plus exposées au rayonnement infrarouge sont refroidies par un flux d'air qui évacue les calories superflues.

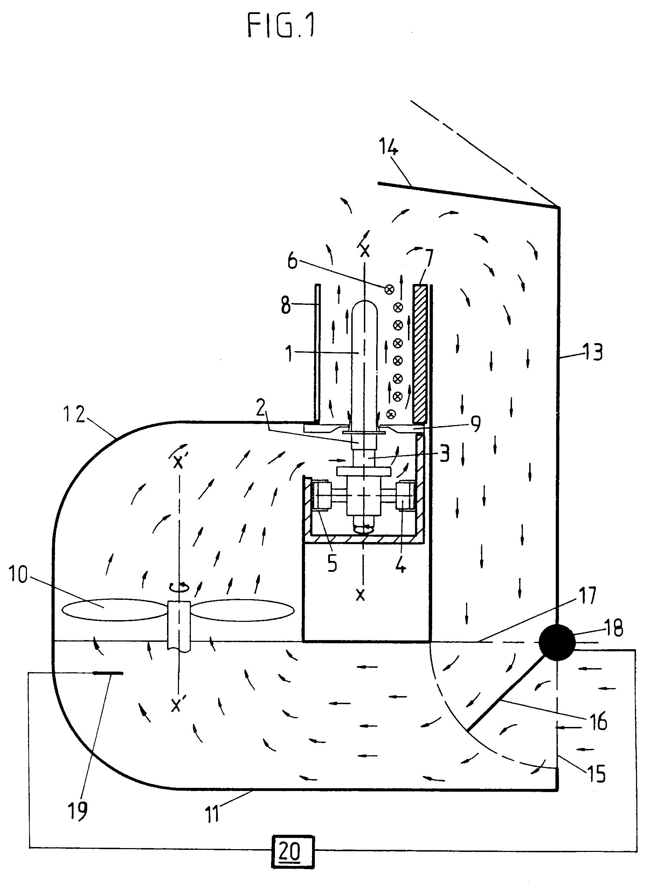

Ce procédé, objet de l'invention, pour chauffer des préformes en matières thermoplastiques en vu de leur transformation ultérieure en récipient tels que bouteilles, flacons ou analogues par soufflage ou étirage soufflage est mis en oeuvre dans un four de conditionnement thermique dont un mode de réalisation est représenté à la Fig 1.

La référence 1 désigne des préformes en matière plastique, notamment en polyéthylènetéréphtalate (PET) qui présentent une extrémité fermée et une extrémité ouverte au col 2 muni d'un filetage. Ces préformes sont obtenues de façon connue, par exemple, par moulage, par injection. Elles sont disposées verticalement sur des supports 3, rotatifs autour de leur axe vertical X-X, leurs extrémités fermées étant dirigées vers le haut.

Les supports 3, guidés latéralement par des galets 4 engagés dans des chemins de roulement 5 horizontaux et parallèles entre eux, défilent dans le four perpendiculairement au plan de la figure.

Des éléments chauffants 6 tels que des lampes à rayonnement infrarouge sont disposées parallèlement au trajet suivi par les préformes 1. Leur nombre dépend de la longueur du corps de la préforme. Dans le mode de réalisation représenté, elles sont au nombre de huit. A l'arrière des éléments chauffants sont disposés des panneaux 7 en matériau isolant. A l'opposé de ces derniers et face aux éléments chauffants sont disposés des réflecteurs 8 réalisés, par exemple, par des plaques métalliques dont le côté qui fait face aux éléments chauffants est poli.

Les éléments chauffants 6, les panneaux 7 en matériau isolant et les réflecteurs 8 sont parallèles entre eux.

Des protecteurs 9, refroidis par une circulation d'eau sont disposés perpendiculairement à l'extrémité inférieure des panneaux 7 isolants et des réflecteurs 8. Ils sont écartés l'un de l'autre de façon à permettre avec un léger jeu, le passage des corps des préformes.

Ces protecteurs évitent aux cols 2 des préformes d'être chauffés par le rayonnement infrarouge émis par les éléments chauffants 6. Ces cols, en effet, ayant été moulés à leur forme et à leurs dimensions définitives ne doivent pas être chauffés pour éviter toute déformation indésirable.

Les panneaux 7 isolants, les réflecteurs 8 et les protecteurs 9 forment ainsi un couloir ouvert vers le haut et muni d'une fente à sa partie inférieure délimitée par les protecteurs 9.

Les corps des préformes, qui font saillie dans ce couloir par ladite fente, défilent devant les éléments chauffants 6 en tournant autour de l'axe X-X afin d'assurer un chauffage uniforme.

Un ventilateur 10, tournant autour d'un axe vertical X-X', aspire de l'air par une tubulure 11 d'admission et le refoule par un déflecteur 12 de guidage de façon telle qu'il circule en un flux ascendant dans le couloir défini par les panneaux 7, les réflecteurs 8 et les protecteurs 9. En fonction de la longueur du four de conditionnement thermique, un ou plusieurs autres ventilateurs peuvent être installés.

Un caisson 13 s'étendant sur la longueur du four de conditionnement thermique est accolé latéralement à ce dernier. Il est muni à sa partie supérieure d'un pannneau pivotant 14, mobile autour d'un axe perpendiculaire à l'axe X-X.

A sa partie inférieure, le caisson 13 est raccordé par l'une de ses faces à la tubulure 11 d'admission du ventilateur 10. Sur la face opposée du caisson est ménagée une ouverture 15 située en face de la tubulure 11. Un volet 16 pivotant autour d'un axe horizontal sous l'action d'un moteur 18 peut obturer complètement ou partiellement l'ouverture 15. L'amplitude de pivotement dudit volet est telle qu'il peut obturer dans ses positions extrêmes soit l'ouverture 15, soit l'ouverture 17 située à la partie inférieure du caisson et s'étendant sur toute la longueur de celui-ci. Il peut en outre occuper toutes les positions intermédiaires comprises entre les positions extrêmes, comme représenté à la Figure 1. Il va de soi que lorsque plusieurs ventilateurs sont installés, il y a autant de tubulures 11 et d'ouvertures 15 que de ventilateurs.

Une sonde de température 19, placée dans la tubulure 11 d'aspiration du ventilateur, dans le flux d'air aspiré, est reliée à un dispositif de régulation 20 qui commande le pivotement du volet 16, dans un sens ou dans l'autre, par l'intermédiaire du moteur 18.

### Fonctionnement :

Le fonctionnement du four de conditionnement thermique décrit ci-avant est le suivant.

Les préformes 1 à chauffer sont mises en place sur les supports 3 rotatifs et défilent, en tournant sur elles-mêmes devant les éléments chauffants 6 à rayonnement infrarouge. Le ventilateur 10 aspire un mélange d'air chaud et d'air à température ambiante. L'air chaud est l'air qui a circulé suivant un trajet ascendant dans le couloir formé par les panneaux 7 et les réflecteurs 8 et qui s'est échauffé en enlevant les calories superflues apportées par le rayonnement infrarouge aux éléments constitutifs du four de conditionnement thermique. Cet air est recyclé partiellement ou totalement par le caisson 13 à travers l'ouverture 17. L'air à température ambiante est puisé dans l'atelier où sont implantés le four de conditionnement thermique et la machine de soufflage ou d'étirage soufflage qui lui est associé. Le volet pivotant 16 permet de règler les proportions d'air chaud recyclé et d'air à température ambiante dans le flux d'air aspiré par le ventilateur 10.

Une température de consigne Tc est fixée par le dispositif de régulation 20. La température Ts, repérée par la sonde 19, de l'air aspiré par le ventilateur est comparée à la température de consigne Tc à tout instant.

Si Ts est supérieur à Tc, le volet 16 se déplace angulairement de façon à diminuer le débit d'air chaud recyclé et à augmenter le débit d'air à température ambiante.

Si Ts est inférieur à Tc, le volet 16 se déplace angulairement de façon à augmenter le débit d'air chaud recyclé et à diminuer le débit d'air à température ambiante.

Lorsque Ts = Tc le volet 16 conserve sa position.

Le panneau pivotant 14 peut aussi être déplacé angulairement pour règler la proportion d'air chaud recyclé. Dans la position représentée en trait plein à la Fig 1, la majeure partie de l'air chaud sera recyclée, tandis que dans la position représentée en traits discontinus, seule une petite partie de celui-ci sera recyclé.

### Avantages

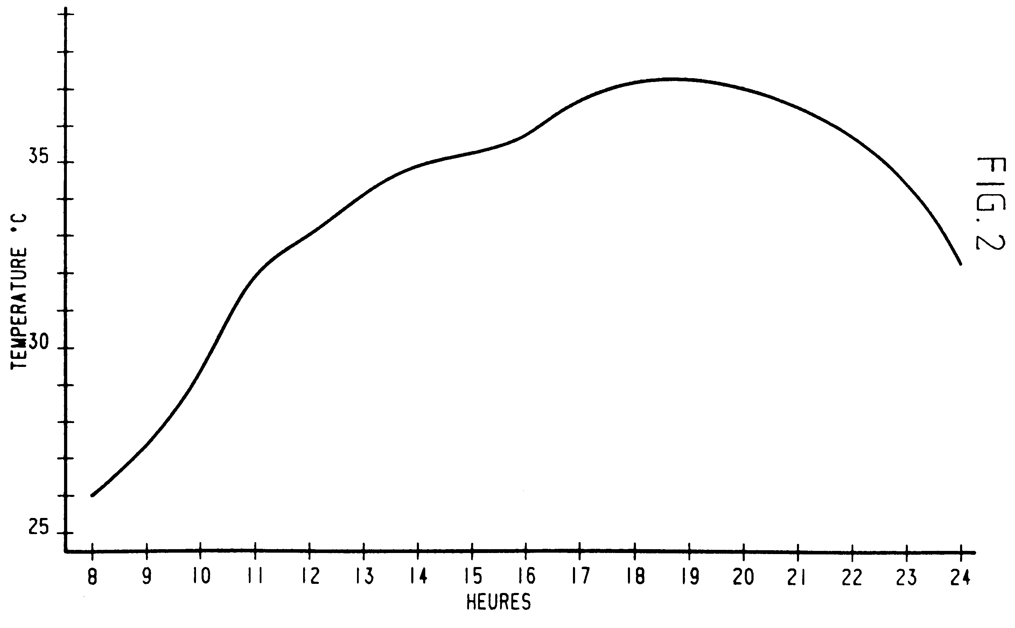

Les avantages présentés par l'invention sont les suivants :
- quelle que soit la température ambiante règnant dans l'atelier, la température de l'air refoulé par le ventilateur reste constante : il en résulte que les conditions de chauffe des préformes restent constantes et qu'il n'est pas nécessaire d'ajuster la puissance de chauffe des éléments chauffants 6 à rayonnement infrarouge en fonction de la température ambiante dans l'atelier qui peut varier d'une façon importante au cours d'une même journée, comme en témoigne le relevé de température expérimental de la Fig 2. Sur ce relevé figurent en abscisse les heures, en ordonnée la température ambiante relevée au niveau de l'orifice 15. Il apparait que entre 8 heures et 19 heures, la température ambiante dans l'atelier a varié de 11°C et est passée de 26°C à 37°C. Dans ce cas précis, en fixant la température de consigne Tc à 37°C, et, grace au dispositif selon l'invention, il ne sera pas nécessaire de procéder à un règlage de la puissance des éléments chauffants 6 au cours de la journée.
- en hiver, le démarrage de la fabrication de corps creux en début de semaine dans un atelier qui n'a pas été chauffé durant les jours non travaillés de la fin de la semaine précédente se fait dans de bonne conditions, sans avoir à modifier le règlage des émetteurs infrarouge. En début de journée, l'air aspirée par le ventilateur sera constitué en majeure partie d'air chaud recyclé par le caisson 13. Au fur et à mesure que la température ambiante de l'atelier s'élèvera, la proportion d'air chaud recyclé aspiré diminuera. La température du flux d'air refoulé par le ventilateur sera ainsi constante.
- les règlages de la puissance des éléments chauffants à infrarouge permettant un chauffage des préformes conduisant à des corps creux soufflés dont la répartition d'épaisseur est satisfaisante peuvent être effectués en usine, avant livraison de la machine, en fonction du lieu d'implantation de celle-ci. En effet, si cette dernière doit être implantée dans un atelier où la température maximale atteinte dans l'année est de 30 °C par exemple, la température de consigne Tc sera fixée à 30 °C et le règlage desdits éléments chauffants sera effectué dans ces conditions.

Il en résulte que la machine sera immédiatement en mesure de produire sitôt son implantation en atelier terminé
- on obtient une grande régularité dans la production des corps creux moulés à partir des préformes chaudes. En effet le conditionnement thermique des préformes est rendu précis, répétitif et indépendant de la température ambiante de l'atelier dans lequel sont implantés le four de conditionnement thermique et la machine de moulage par soufflage ou étirage soufflage qui lui est associé.
- la régulation de la température de l'air admis dans le four de conditionnement thermique est obtenu au moyen d'une seule source d'énergie constituée par l'air chaud ayant servi à refroidir les éléments constitutifs du four. Pour assurer cette régulation, il suffit que la température de consigne fixée Tc soit égale à la température ambiante maximum qui sera atteinte dans l'atelier.
- la température Tc de consigne peut être fixée à la valeur maximum atteinte par la température ambiante soit au cours de la journée, soit au cours de la semaine, soit au cours du mois, soit au cours de l'année.
- la température de l'air de refroidissement restera constante malgré une variation brusque de la température ambiante provoquée, par exemple, par l'ouverture d'un portail, une averse, un ensoleillement passager, etc...

## Revendications

1. Procédé de conditionnement thermique de préformes en matière thermoplastique, notamment en polyéthylènetéréphtalate (PET), destinées à la fabrication de corps creux tels que bouteilles, flacons ou analogues par soufflage ou étirage soufflage dans lequel les préformes en rotation sur elles-mêmes sont chauffées par défilement devant des éléments chauffants à rayonnement infrarouge, un flux d'air de refroidissement étant utilisé pour évacuer les calories superflues générées par la rayonnement infrarouge, caractérisé en ce que la température du flux d'air de refroidissement est maintenu constante et égale à une température de consigne Tc fixée à l'avance en mélangeant des proportions respectivement réglables d'air à la température ambiante et d'air chaud provenant du recyclage d'au moins une partie du flux d'air de refroidissement qui s'est échauffé en évacuant les calories superflues.

2. Procédé de conditionnement thermique selon la revendication 1, caractérisé en ce que la température Tc est égale à la valeur maximale atteinte par la température ambiante au cours d'une durée de temps donnée.

3. Procédé de conditionnement thermique selon la revendication 2, caractérisé en ce que la durée de temps peut être plus ou moins longue et couvrir des durées allant de la journée à une année.

4. Dispositif de conditionnement thermique de préformes en matière thermoplastique, notamment en polyéthylènetéréphtalate (PET), destinées à la fabrication de corps creux tels que bouteilles, flacons ou analogues par soufflage ou étirage soufflage, comprenant des supports rotatifs (3) de préformes (1) défilant devant des éléments chauffant (6) à rayonnement infrarouge, des panneaux (7) isolants disposés à l'arrière des éléments chauffants, des réflecteurs (8) disposés face aux éléments chauffants, des protecteurs (9) des cols des préformes et au moins un ventilateur (10) créant un flux d'air de refroidissement qui évacue les calories superflues générées par le rayonnement infrarouge en refroidissant les parties constitutives dudit dispositif,
caractérisé en ce qu'il comporte : des moyens de recyclage (13) d'au moins une partie du flux d'air de refroïdissement qui s'est échauffé en évacuant les calories superflues ; des moyens de mélange d'air chaud recyclé et d'air à température ambiante admis dans la tubulure (11) d'aspiration du ventilateur (10) ; et des moyens de réglage (14, 16) des proportions respectives d'air chaud recyclé et d'air à température ambiante ; ce grâce à quoi il est possiblè de maintenir la température du flux d'air de refroidissement constante et égale à une température de consigne Tc.

5. Dispositif de conditionnement thermique selon la revendication 4, caractérisé en ce que le moyen de réglage (16) peut occuper toutes les positions intermédiaires entre deux positions extrêmes, l'une dans laquelle une ouverture (17) s'étendant sur toute la longueur du moyen de recyclage (13) est totalement fermée, l'autre dans laquelle une ouverture (15), située en face de la tubulure (11), est totalement fermée.

6. Dispositif de conditionnement thermique selon la revendication 4 ou 5, caractérisé en ce que le moyen de réglage (16) est actionné par un moteur (18) piloté par un dispositif de régulation (20) grâce auquel on peut fixer une température de consigne Tc.

7. Dispositif de conditionnement thermique selon l'une quelconque des revendications 4 à 6, caractérisé en ce qu'une sonde de temperature (19), placée dans la tubulure (11) et reliée au dispositif de régulation, permet de comparer à tout instant la température de l'air aspiré par le ventilateur (10) et la température de consigne Tc.

## Claims

1. A process for the thermal treatment of preforms made of thermoplastic material, in particular of polyethyleneterephthalate (PET), for the manufacture of hollow bodies such as bottles, flasks, and similar articles, by blowing or blowing-stretching, in which the preforms are rotated about axes thereof and are heated while being conveyed in front of infrared radiation heating elements, a flow of cooling air being used to draw away excess calories generated by the infrared radiation, characterized by that the temperature of the flow of cooling air is maintained constant and equal to a reference temperature Tc set in advance by mixing respectively adjustable proportions of air at ambient temperature and heated air from the recycling of at least a portion of the flow of cooling air which has become heated from evacuating the excess calories.

2. A thermal treatment process according to claim 1, characterized in that the reference temperature Tc is equal to the maximum value reached by the ambient temperature during a given time period.

3. A thermal treatment process according to claim 2, characterized in that the time period may be more or less long and covers a range of from one day to one year.

4. An apparatus for the thermal treatment of preforms made of thermoplastic material, in particular polyethyleneterephthalate (PET), for the manufacture of hollow bodies such as bottles, flasks, and similar objects, by blowing or blowing-stretching, said apparatus comprising rotating preform supports (3) runing in front of infrared radiation heating elements (6), insulation panels (7) disposed behind said heating elements, reflectors (8) disposed facing said heating elements, protection elements (9) for the preform necks, and at least one fan (10) generating a flow of cooling air for drawing away excess calories generated by the infrared radiation while cooling components of said apparatus, characterized in that it comprises recycling means (13) for recycling at least a portion of the flow of cooling air which has become heated while evacuating the excess calories ; mixing means for mixing recycled heated air and ambient temperature air fed into the intake (11) of the fan (10) ; and adjusting means (14, 16) for adjusting respective proportions of recycled heated air and ambient temperature air ; whereby it is possible to maintain the temperature of the cooling air flow constant and equal to a reference temperature (Tc).

5. A thermal treatment apparatus according to claim 4, characterized in that said adjustment mechanism (16) can occupy all intermediate positions between two end positions, in one of which an opening (17) extending over the entire lenght of the recycling means is completely closed, and in another of which an opening (15) located facing the air intake (11) is completely closed.

6. A thermal treatment apparatus according to claim 4 or 5, characterized in that the adjustement mechanism (16) is actuated by a motor (18) controlled by a regulation device (20) by means of which a reference temperature (Tc) can be set.

7. A thermal treatment apparatus according to anyone claims 4 to 6, characterized in that a temperature sensor (19), disposed in the air intake (11) and connected to the regulation device, allows to continuously compare the temperature of the air drawn in by the fan (10) to the reference temperature (Tc).

## Patentansprüche

1. Verfahren zum thermischen Konditionieren von Vorformlingen aus thermoplastischem Kunststoff, insbesondere aus Polyethylenterephthalat (PET), zur Herstellung von Hohlkörpern wie Flaschen, Flakons oder dergleichen mittels Blasformen oder Streck-Blasformen, bei weichem die um sich selbst rotierenden Vorformlinge durch Vorbeiführen an Heizelementen mit Infrarotstrahlung erhitzt werden, wobei ein Kühlluftstrom benutzt wird, um die durch die Infrarotstrahlung erzeugte Überschußwärme abzuführen, dadurch gekennzeichnet, daß die Temperatur des Kühlluftstroms konstant und gleich einer Einstelltemperatur Tc gehalten wird, die im voraus durch Mischen der entsprechend einstellbaren Anteile an Luft mit Raumtemperatur und warmer Luft aus der Rückführung wenigstens eines Teils des beim Abführen der Überschußwärme erhitzten Kühlluftstroms festgesetzt wird.

2. Verfahren zum thermischen Konditionieren nach Anspruch 1, dadurch gekennzeichnet, daß die Temperatur Tc gleich dem von der Raumtemperatur im Verlauf eines gegebenen Zeitraums erreichten Maximalwert ist.

3. Verfahren zum thermischen Konditionieren nach Anspruch 2, dadurch gekennzeichnet, daß der Zeitraum mehr oder weniger lang sein kann und sich über eine Dauer von einem Tag bis zu einem Jahr erstrecken kann.

4. Vorrichtung zum thermischen Konditionieren von Vorformlingen aus thermoplastischem Kunststoff, insbesondere aus Polyethylenterephthalat (PET), zur Herstellung von Hohlkörpern wie Flaschen, Flakons oder dergleichen mittels Blasformen oder Streck-Blasformen, mit rotierenden Auflagen (3) für Vorformlinge (1), die an den Heizelementen (6) mit Infrarotstrahlung vorbeigeführt werden, mit hinter den Heizelementen angeordneten Isolierplatten (7), mit den Heizelementen gegenüber angeordneten Reflektoren (8), mit Schutzeinrichtungen (9) für den Hals der Vorformlinge und mit wenigstens einem Ventilator (10), der einen Kühlluftstrom erzeugt, der die durch die Infrarotstrahlung erzeugte Überschußwärme durch Kühlen der Bestandteile der Vorrichtung abführt,
dadurch gekennzeichnet, daß sie Rückführeinrichtungen (13) für wenigstens einen Teil des beim Abführen der Überschußwärme erhitzten Kühlluftstroms, Einrichtungen zum Mischen von rückgeführter, warmer Luft und dem Saugrohr (11) des Ventilators (10) zugeführter Luft mit Raumtemperatur und Einrichtungen (14, 16) zum Einstellen der jeweiligen Anteile an rückgeführter, warmer Luft und Luft mit Raumtemperatur umfaßt, aufgrund dessen es möglich ist, die Temperatur des Kühlluftstroms konstant und gleich einer Einstelltemperatur Tc zu halten.

5. Vorrichtung zum thermischen Konditionieren nach Anspruch 4, dadurch gekennzeichnet, daß die Einstelleinrichtung (16) alle Zwischenstellungen zwischen zwei Endstellungen einnehmen kann, nämlich einer, in der eine sich über die gesamte Länge der Rückführeinrichtung (13) erstreckende Öffnung (17) vollständig geschlossen ist, und einer weiteren, in der eine gegenüber dem Saugrohr (11) liegende Öffnung (15) vollständig geschlossen ist.

6. Vorrichtung zum thermischen Konditionieren nach Anspruch 4 oder 5, dadurch gekennzeichnet, daß die Einstelleinrichtung (16) von einem Motor (18) angetrieben wird, der von einer Regelvorrichtung (20) gesteuert wird, mittels derer eine Einstelltemperatur Tc festgesetzt werden kann.

7. Vorrichtung zum thermischen Konditionieren nach einem der Ansprüche 4 bis 6, dadurch gekennzeichnet, daß ein in das Saugrohr (11) eingesetzter und mit der Regelvorrichtung verbundener Temperaturfühler (19) es ermöglicht, jederzeit die Temperatur der von dem Ventilator (10) angesaugten Luft mit der Einstelltemperatur Tc zu vergleichen.
